# EUROPEAN PATENT APPLICATION

(11) **EP 2 088 549 A1**
(43) Date of publication of application: **12.08.2009**
(21) Application number: 08300082.8
(22) Date of filing: 11.02.2008
(51) Int. Cl.: G06Q 20/00

(54) **Customer initiated payment method**

(71) Applicant: Accenture Global Services GmbH, 8200 Schaffhausen (CH)
(72) Inventor: The designation of the inventor has not yet been filed
(74) Representative: de Beaumont, Michel

(57) **Abstract**

The invention concerns a method of making a payment transaction by a customer at a point of sale including steps of receiving, by a mobile device (402) of the customer, merchant data; transmitting, by the mobile device to a remote server (408), a payment transaction request including the merchant data; determining, by the remote server, the identity of the customer based on the request and the identity of the merchant based on the data; and implementing the payment transaction between bank accounts of the customer and the merchant.

## Description

### FIELD OF THE INVENTION

The present invention relates to a system and method for making a payment by a customer at a point of sale, and in particular to a customer initiated payment system and method.

### BACKGROUND TO THE INVENTION

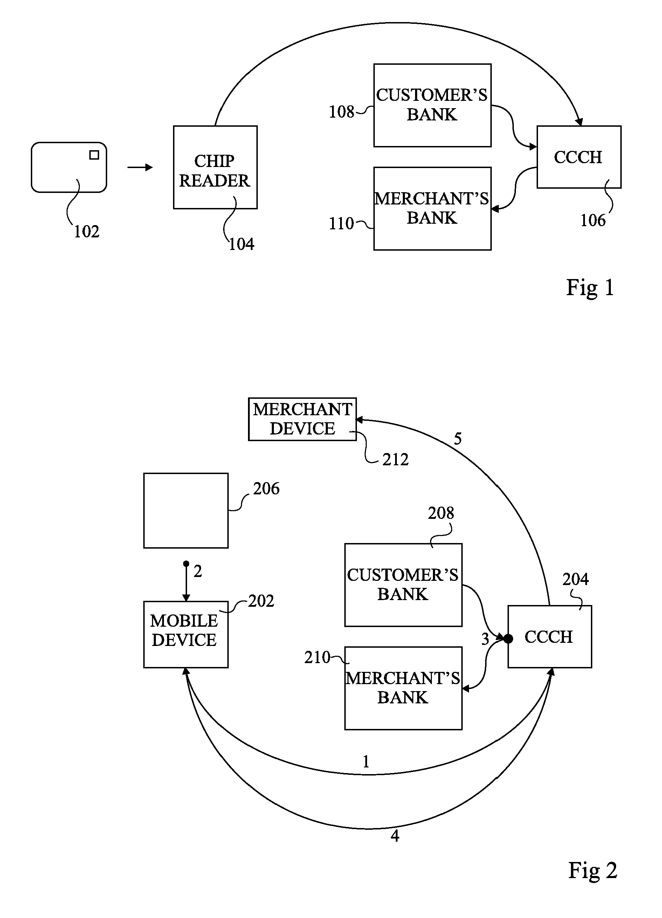

Figure 1 illustrates schematically a payment method often used for making payments by payment card, such as a credit or debit card.

The payment card 102 is a smart card having a built-in chip 103, and is presented by a customer at a point of sale. The card is placed in a chip reader 104, which reads the chip and requests that the customer types his/her PIN (personal identification number). The correct PIN is stored on the electronic chip 103 and thus the chip reader 104 is able to immediately verify whether the PIN has been correctly entered. The card details and transaction details are then transmitted to a credit card clearing house (CCCH) 106, for example via a telephone line, and the credit card clearing house settles both the customer's account and the merchant's account, by transferring money from customer's bank 108 to the merchant's bank 110.

One drawback of this method for payment is that by handing over a payment card, which is inserted into the merchant's card reader at point of sale, the customer risks having personal details such as the payment card number, expiry date, and importantly the PIN, stolen. In particular, there is a risk that the vendor's card reader has been tempered with, allowing the payment card to be cloned, and the PIN copied when entered by the customer. Furthermore, it is often only necessary for a fraudster to obtain the card number in order to make a fraudulent transaction, making even handing over a payment card risky for a customer.

### SUMMARY OF THE INVENTION

One aim of the present invention is to at least partially address one or more drawbacks in the prior art.

According to one aspect of the present invention, there is provided a method of making a payment transaction by a customer at a point of sale comprising: receiving, by a mobile device of the customer, merchant data; transmitting, by the mobile device to a remote server, a payment transaction request comprising the merchant data; determining, by the remote server, the identity of the customer based on the request and the identity of the merchant based on the data; and implementing the payment transaction between bank accounts of the customer and the merchant.

According to one embodiment of the present invention, the method further comprises transmitting a personal identification number (PIN) entered by the customer to the remote server, and verifying the PIN by the remote server.

According to another embodiment of the present invention, the method further comprises transmitting a confirmation message by the remote server to the mobile device after implementing the payment transaction.

According to another embodiment of the present invention, the merchant data comprises at least one image of a visual token captured by a camera of the mobile device, the visual token comprising encoded data identifying the merchant.

According to another embodiment of the present invention, the method comprises, prior to receiving the merchant data by the mobile device, producing the visual token, wherein the visual data further encodes transaction details relating to the payment transaction.

According to another embodiment of the present invention, the step of transmitting the merchant data to the remote server comprises establishing a video call between the mobile device and the remote server, wherein images of the visual token are captured by the camera of the mobile device and transmitted to the remote server as part of the video call.

According to another embodiment of the present invention, the merchant data is transmitted by point of sale equipment to be received by the mobile device.

According to another embodiment of the present invention, the merchant data is transmitted from the point of sale equipment to the mobile device using near field communications.

According to another embodiment of the present invention, the mobile device is selected as the mode of payment for the payment transaction my positioning the mobile device within communication range of the point of sale equipment.

According to another embodiment of the present invention, identity of the customer is determined based on a caller identification of the mobile device received by the server upon reception of payment transaction request.

According to another aspect of the present invention, there is provided a system arranged to make a payment transaction by a customer at a point of sale comprising: a mobile device of the customer arranged to receive merchant data; and a remote server arranged to receive from the mobile device a payment transaction request comprising the merchant data, to determine the identity of the customer based on the request and the identity of the merchant based on the data, and to implement the payment transaction between bank accounts of the customer and the merchant.

According to an embodiment of the present invention, the remote server comprises a memory arranged to store merchant account details associated with the merchant data and customer account details.

According to yet another aspect of the present invention, there is provided a server arranged to make a payment transaction between a customer account and a merchant account, comprising: an input interface arranged to receive from a mobile device of the customer a payment transaction request comprising merchant data of the merchant; a memory arranged to store merchant account details associated with merchant data and to store customer account details; and circuitry arranged to determine the identity of the customer based on the payment transaction request and to select the account details associated with the merchant data and customer account details associated with the customer for use in making the payment transaction.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which:
Figure 1 (described above) illustrates a known customer payment method;
Figure 2 illustrates steps in a customer initiated payment method according to an embodiment of the present invention;
Figure 3 illustrates steps in an alternative customer initiated payment method according to embodiments of the present invention;
Figure 4 illustrates a system for implementing the methods of Figures 2 or 3 according to an embodiment of the present invention; and
Figure 5 illustrates the server of the system of Figure 4 in more detail according to an embodiment of the present invention.

### DETAILED DESCRIPTION OF THE EMBODIMENTS OF THE PRESENT INVENTION

Figure 2 illustrates a customer initiated payment method in which the customer makes a payment to a merchant using his/her mobile device 202. Mobile device 202 is for example a mobile telephone, pocket super computer, or other portable communications device, which could be a PDA (personal digital assistant), a music or media player, a games console etc. with WiFi (wireless fidelity), Bluetooth capabilities or another communications capability.

The customer's mobile device 202 is registered with a credit card clearing house (CCCH) 204, such that when a call is made to CCCH 204 from the customer's mobile device 202, the customer is identified by the CCCH using caller ID or the like. CCCH 204 also stores registered details of the client's payment method, for example payment card details and/or bank account details, allowing CCCH 204 to execute a payment from the customer to a third party.

The merchant is preferably enrolled via the CCCH 204 in a visual payment system, whereby the merchant is provided with a unique visual token 206, which is for example a 2-dimensional barcode, or text indicating the merchant's name, number, picture or the like, and could be provided on a card, screen or printed on a piece of paper. The CCCH 204 for example comprises a memory electronically storing images of visual tokens along with the associated bank details of the merchant.

When a customer wishes to make a payment to a merchant, as a first step, at the point of sale, the customer calls the CCCH 204 using mobile device 202, as shown by arrow 1 in Figure 1. The telephone call could be a voice call, or in some embodiments, a video call, for example using a 3G mobile network or the like. The customer enters the amount of the transaction, for example through an automatic voice response (AVR) menu, implemented for example by a server in the CCCH 204. For example, the customer dictates the transaction details, or types them to the keypad of his mobile device. The transaction details include the total amount of money to be transferred by the transaction, and could include further information, such as the transaction date, if the transaction is not to be executed immediately, and/or the transaction currency.

The CCCH 204 then requests that the customer provides an image of the merchant's visual token 206. For example, in some embodiments, a voice instruction is provided by the integrated voice response unit (AVRU) implemented by the server in the CCCH 204 for the customer to capture images of the visual token 206, or in the case of a video call, visual instruction could be transmitted to the display of the mobile device 202 by the server.

The customer then films the merchant's visual token 206 using the camera on the device, as shown by arrow 2 in Figure 2. For this, mobile device 202 comprises an in-built digital camera, enabling images to be captured.

Next, one or more images are transmitted to the CCCH 204. For example, if the call is initiated as a video call, images can be transmitted to the CCCH 204 as part of the video call, and feedback can be provided within the video call by the CCCH to indicate when the merchant's visual token 206 has been recognized and the merchant identified. So that the customer can be sure that the correct merchant has been identified, the name of the merchant could be transmitted to the display of the mobile device 202. Alternatively, if the call is initiated as a voice call, one or more images could be captured of the visual token 206, and transmitted to the CCCH 204, for example via a media message or the like. Confirmation of the merchant could then also be sent via SMS (short message service) text message or media message.

In some embodiments, for security reasons, the CCCH 204 may request a PIN from the customer. In such embodiments, the PIN is registered with the CCCH 204, such that the CCCH 204 can verify that the PIN is correctly entered. The PIN request could be in the form of a visual message on the display of the mobile device requesting that the PIN be entered, or a voice request. The PIN is for example entered during a call with the server of the CCCH, and when the call is managed by an interactive voice response system in the server, the customer for example types the PIN using the keypad of the mobile device. Alternatively, in some embodiments a random portion of the PIN could be requested and the relevant characters of the PIN dictated by the customer, and voice recognition in the server of the CCCH used to recognise the PIN.

The CCCH 204 may then proceed to perform the required payment transaction. In particular, the CCCH 204 settles both accounts, by transferring the sum from the customer's bank to the merchant's bank, or billing the customer and paying the merchant the balance, as represented by arrow 3 in Figure 2.

As illustrated by arrows 4 and 5 in Figure 2, a confirmation message can then be transmitted to mobile device 202, and if the merchant has registered a telephone number or other contact detains with the CCCH 204, to a merchant's mobile telephone or message receiving device 212. This allows the merchant to confirm that the payment has been made, and to allow the customer to leave with the purchases. In some embodiments, the merchant's point of sale equipment receives the confirmation message, allowing payment confirmation of the sale to be registered.

In alternative embodiments, rather than the merchant using the same visual token 206 for each payment transaction, the merchant could produce a visual token 206 for each payment transaction. For example, a visual token could be printed, or presented on an LCD (liquid crystal display) or alternative display. In this case the token can encode additional information such as the details of the payment transaction, including the total cost of the transaction. The token could comprise a 2-D barcode or the like, or the typed transaction details, printed or displayed on a screen. In the latter case, the CCCH 204 for example uses optical character recognition of the image transmitted by the mobile device 202 to determine the transaction details. The visual token 206 can be generated, for example by point of sale equipment of the merchant, and this means that the customer no longer needs to provide the transaction details.

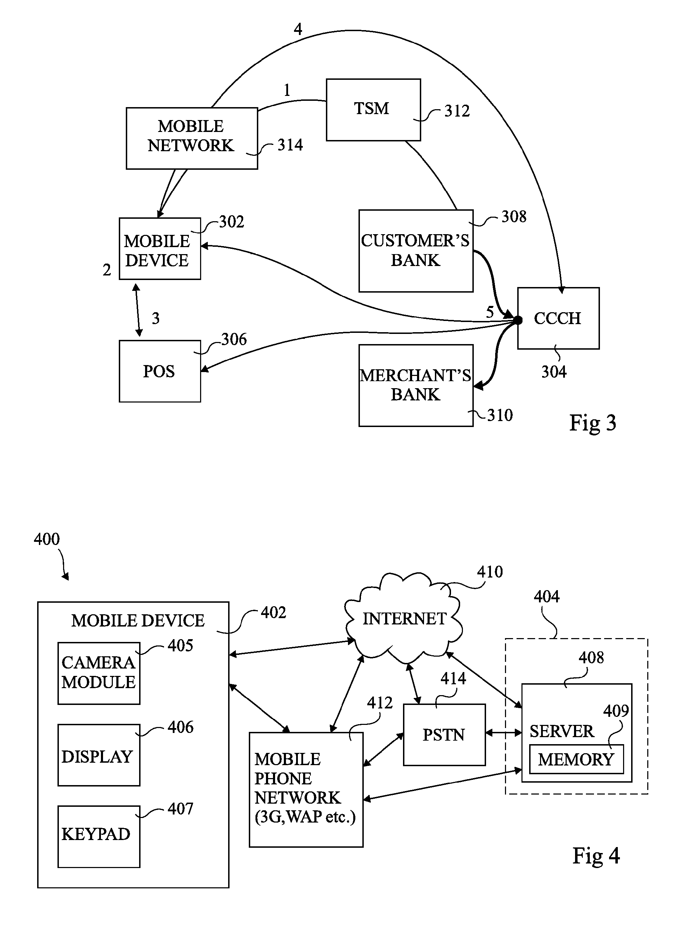

Figure 3 illustrates an alternative embodiment, in which again a customer's mobile device 302 is used to make a payment. Mobile device 302 is equipped with short-range communication technology, such as near field communications hardware, or Bluetooth hardware, allowing radio frequency (RF) communication with an interface of the merchant's point of sale equipment. Alternatively, other technologies could be used, such as infrared.

Whereas in the previous embodiment the merchant is identified by an image of a visual token captured and transmitted by the customer's mobile device, in this embodiment the merchant electronically provides identification details to the mobile device 302 than can be forwarded to the credit card clearing house 304. For example, the details could include, in text format or encoded format, the name of the merchant, the total transaction amount, and may include other details such as the date and currency of the transaction.

Again, the customer's mobile device is known to the CCCH 304. Furthermore, the mobile device 202 has for example been loaded with a payment application, which provides functionality on the mobile device for automatically managing transmission of information needed to make the payment, and allowing an interface with the customer. In one embodiment, prior to initiating a transaction, the Trusted Service Manager (TSM) 312 associated with the mobile telecommunications network 314 of the mobile device 302 provides a payment application, such as a credit card application, to the mobile device 302 via mobile network 306, as shown by arrow 1 in Figure 3. Alternatively, such an application could be loaded onto the phone from elsewhere.

When the customer is ready to pay for purchases in a store, the customer indicates that they wish to make the payment using their mobile device 302, and the merchant activates point of sale equipment 306. A payment instrument is selected and negotiated between the POS equipment 306 and the mobile device 302 as shown by arrow 2 in Figure 3. This involves the mobile device 302 being confirmed in the POS equipment 306 as being the payment mechanism. In particular, when the merchant payment system requests to know the mode of payment, "mobile payment" can be selected, triggering connection with the mobile device 302 to transmit the merchant and transaction details.

The mobile device 302 is placed within range of the POS equipment 306 such that the transmission can be effected. Preferably, the range of the point of sale equipment 306 is relatively short, ensuring that only mobile device 302 is found, and not other mobile devices present in the shop. In some embodiments, rather than the merchant telling the POS equipment 306 that payment is to be made by mobile device, just placing the mobile device in range of the POS equipment 306 indicates the intention of the customer to pay by mobile device. In this case, communication between the POS equipment 306 and mobile device 302 starts automatically.

There may be a number of different payment instruments that can be used by the mobile device 302 to make a payment transaction. In particular, the customer may have a VISA card, an American Express Card and VISA Delta card, all registered with the CCCH 306, or with different credit card clearing houses. In this case, the POS equipment 306 and mobile device 302 for example communicate to determine which payment instruments are possible for making the payment transaction. In the case that it is determined that more than one payment instrument is possible, for example a VISA payment and Visa delta payment, this could trigger mobile device to request, for example via its display, that the customer indicate the payment method they wish to use. Alternatively, the customer may have configured in a memory of the mobile device 306 an order of preference for payment instruments, in which case the highest acceptable payment instrument can be used.

The POS equipment 306 then transmits the details of the merchant, along with details of transaction, to the mobile device 302, as shown by arrow 3 in Figure 3. Alternatively or additionally, transmission of the merchant/transaction details could require the customer to accept them via the keypad on the mobile device 302. As discussed above, the transmission could be implemented using near field communications hardware, or Bluetooth, or other technology.

The payment application installed on the mobile device 302 then preferably requests that the customer enters a PIN to confirm that it is indeed the registered customer that is trying to make the purchase, and not somebody who has stolen the customer's mobile device. The merchant details, transaction details, and PIN are then sent to the CCCH 304 as shown by arrow 4 in Figure 3. Transmission is for example by text message, or media message, or within a mobile telephone call between mobile device 302 and CCCH 304, during which the information is automatically transmitted via an AVRU. As a further alternative, transmission may be via a proprietary data exchange between the mobile payment application and the CCCH 304.

The CCCH 304 is then able to complete the payment transaction, by transferring money from the customer's bank 308 to the merchant's bank 310.

Figure 4 illustrates the blocks of a system 400 for implementing the method of Figure 2 or Figure 3. The mobile device 402 represents device 202 or 302 of Figures 2 and 3 respectively, while the block 404 represents the CCCH 204 or 304 of Figures 2 and 3 respectively.

Mobile device 402 for example comprises a camera module 405, a display 406 and a keypad 407. It may also comprise further components not shown in Figure 4, for example a base band processor, memory and battery.

The CCCH 404 comprises a server 408 which is able to communicate with the mobile device 402. Server 408 is furthermore able to respond to voice and/or video calls, and in some embodiments implements an AVRU for responding to calls.

Server 408 comprises a memory 409 which for example stores account details relating to the customer, which are associated in the memory with the caller identification number of the customer such that when a customer calls, their account details can be extracted from the memory. Furthermore, in relation to the embodiment of Figure 2, the memory 409 can store merchant account details associated with a merchant identifier, for example the name of the merchant, or, in the case of the embodiment of Figure 2, a visual image corresponding to visual token of the merchant. The merchant details can then be determined by server 408 by comparing the merchant's visual token 206 transmitted by the customer's device with visual images in the database, and for example using object recognition to find a match.

In relation to the embodiment of Figure 3, the memory 409 for example stores account details relating to the merchant and associated with the merchant details transmitted by the point of sale 306 to the customer's device, and received by the server 408. In particular, the merchant details could comprise a merchant identifier number, which is stored in the memory 409 in association with the merchant's account details.

As illustrated, the interfaces between the mobile device 402 and the server 408 for example include the Internet 410, a mobile telephone network 412 and the public switched telephone network (PSTN) 414. In particular, the mobile device 402 may have WLAN (wireless local area network) access, allowing the merchant to access the Internet, and contact server 408 via an encrypted connection over the Internet 410. Alternatively, the mobile device 402 may be connected to the Internet 410 via the mobile telephone network 412, for example using 3G or WAP (wireless application protocol), and may connect to the server via a secured encrypted connection via the mobile network 412 and the Internet 410. Alternatively, the server 408 may have a connection to the mobile network 412 directly, in which case the mobile device 402 could communicate to the server 408 directly via the mobile network 412, for example using 3G in the case of a 3G video call. As a further alternative, the server 408 may be accessed via the public switched telephone network (PSTN), illustrated by block 414, either via the mobile telephone network 412 or the Internet 410 accessible by the mobile device 402.

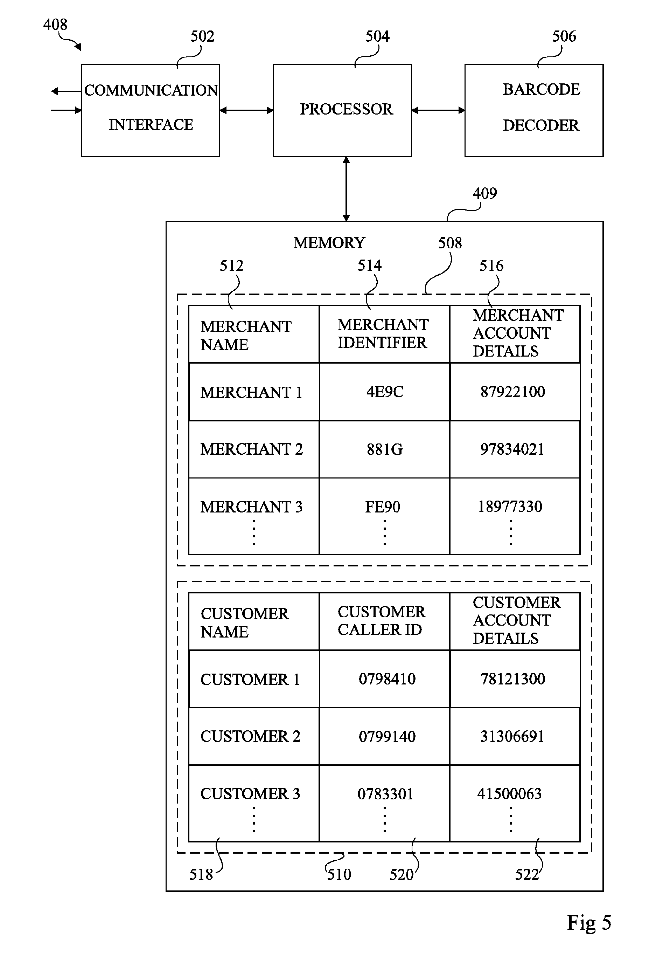

Figure 5 illustrates the server 408 of Figure 4 in more detail according to one embodiment.

As illustrated, a communication interface 502 is provided for communicating with the mobile device of the customer. Communication interface 502 for example comprises circuitry for connecting the server 408 to one or more of the interfaces illustrated in Figure 4 allowing communication with the mobile device.

The communication interface 502 is connected to a processor 504, which is in turn connected to an optional barcode decoder 506. The barcode decoder 506 is provided in embodiments described in relation to Figure 2 in which a visual token is captured by the mobile device, the visual token being a 2-D barcode. The barcode decoder decodes a merchant identifier and any other data encoded by the barcode.

The memory 409 is connected to processor 504, and comprises a merchant database 508, and a customer database 520. In this example, the merchant database comprises merchant names 512, each associated with a merchant identifier 514, and merchant account details 516. The customer database comprises customer names 518, each associated with a customer caller ID 520, which is for example the telephone number of the customer's mobile device, and customer account details 522.

The processor 504 executes the steps of the server described above in relation to Figures 2 and 3, for example providing an AVRU, accessing the memory 409 to extract account detail of the customer and merchant etc.

Thus, a method has been described wherein a mobile device is used by a customer to make a payment transaction, using either the camera of the mobile device to film a visual token and thereby allow a server of a credit card clearing house or the like to identify the merchant or a communications interface of the mobile device to receive details of the merchant transmitted by point of sale equipment of the merchant. The mobile device can then be used to make a secure connection to the server of the CCCH in order to provide the transaction details, and preferably provide a PIN to the server.

An advantage of the payment method described herein is that, by using a customer's mobile device to connect to a server of a CCCH or the like via one of a number of possible connection means and make the payment, the payment can be made in a secure, cost effective and simple fashion. In particular, mobile telephones are affordable devices that are already in high circulation, making them readily available for this purpose. In some embodiments, connection to the server of the CCCH is via a video call. Mobile telephones increasingly have 3G capability or the like, allowing video calls to be made.

In some embodiments, a PIN is entered using the customer's mobile device. This has the additional advantage of adding an extra level of security to the transaction. In particular, in the case that the customer's mobile device is stolen, the thief would also need the PIN in order to make a fraudulent transaction.

Whilst a number of particular embodiments have been described, it will be clear to those skilled in the art that there are many alternatives that may be applied. For example, while the invention has been described in the case of a payment by credit card via a CCCH, it will be apparent to those skilled in the art that the payment could relate to any type of card payment, in which a card can be identified to identify the customer's bank account. Furthermore, the CCCH could be any establishment that can receive and authenticate details of a transaction, and apply these by debiting the customer and crediting the merchant.

It will be clear that while the present invention has been described in relation to a purchase by a customer, the same method could also be applied to reimburse a customer, in which case the same acts could be performed, only the transaction details indicating that the money has to be credit to the customer's account, and debited from the merchant's bank. In this case, an encrypted PIN from the merchant could be provided to the CCCH, for example via the customer's mobile device, to ensure that the merchant has agreed to the transaction.

While a few examples of connection interfaces between the merchant's mobile device and the CCCH have been provided, other interfaces could be used, for example other types of mobile telephony standards for calls or internet connections.

It will be apparent to those skilled in the art that the features described herein in relation to the various embodiments could be combined in alternative embodiments in any combination.

## Claims

1. A method of making a payment transaction by a customer at a point of sale comprising:
receiving, by a mobile device (202, 302) of the customer, merchant data;
transmitting, by said mobile device to a remote server (408), a payment transaction request comprising said merchant data;
determining, by said remote server, the identity of said customer based on said request and the identity of said merchant based on said data; and
implementing said payment transaction between bank accounts (208, 210, 308, 310) of said customer and said merchant.

2. The method of claim 1, further comprising transmitting a personal identification number (PIN) entered by said customer to said remote server, and verifying said PIN by said remote server.

3. The method of claim 1 or 2, further comprising transmitting a confirmation message by said remote server to said mobile device after implementing said payment transaction.

4. The method of any preceding claim, wherein said merchant data comprises at least one image of a visual token (206) captured by a camera of said mobile device, said visual token comprising encoded data identifying said merchant.

5. The method of claim 4, further comprising, prior to receiving said merchant data by said mobile device, producing said visual token, wherein said visual data further encodes transaction details relating to said payment transaction.

6. The method of claim 4 or 5, wherein said step of transmitting said merchant data to said remote server comprises establishing a video call between said mobile device and said remote server, wherein images of said visual token are captured by said camera of said mobile device and transmitted to said remote server as part of said video call.

7. The method of any of claims 1 to 3, wherein said merchant data is transmitted by point of sale equipment (306) to be received by said mobile device.

8. The method of claim 7, wherein said merchant data is transmitted from said point of sale equipment to said mobile device using near field communications.

9. The method of claim 7 or 8, wherein said mobile device is selected as the mode of payment for said payment transaction my positioning said mobile device within communication range of said point of sale equipment.

10. The method of any preceding claim, wherein the identity of said customer is determined based on a caller identification of said mobile device received by said server upon reception of payment transaction request.

11. A system arranged to make a payment transaction by a customer at a point of sale comprising:
a mobile device (202, 302) of said customer arranged to receive merchant data; and
a remote server (408) arranged to receive from said mobile device a payment transaction request comprising said merchant data, to determine the identity of said customer based on said request and the identity of said merchant based on said data, and to implement said payment transaction between bank accounts (208, 210, 308, 310) of said customer and said merchant.

12. The system of claim 11, wherein said remote server comprises a memory (409) arranged to store merchant account details associated with said merchant data and customer account details;

13. A server arranged to make a payment transaction between a customer account and a merchant account comprising:
an input interface (502) arranged to receive from a mobile device of the customer a payment transaction request comprising merchant data of the merchant;
a memory (409) arranged to store merchant account details (516) associated with merchant data (514) and to store customer account details (522); and
circuitry (504) arranged to determine the identity of said customer based on said payment transaction request and to select the account details associated with said merchant data and customer account details associated with said customer for use in making said payment transaction.
